# EUROPEAN PATENT SPECIFICATION

(11) **EP 0 417 900 B1**
(45) Date of publication and mention of the grant of the patent: **05.07.1995**
(21) Application number: 90308509.0
(22) Date of filing: 02.08.1990
(51) Int. Cl.: G11B 5/55, G11B 27/10

(54) **Disk storage system with access control**
Plattenspeichersystem mit Zugangskontrolle
Mémoire à disques avec contrôle d'accès

(30) Priority: 24.08.1989 JP 216198/89
(43) Date of publication of application: 20.03.1991
(73) Proprietor: International Business Machines Corporation, Armonk, N.Y. 10504 (US)
(72) Inventor: Nakagawa, Yoshihiro, Fujisawa-shi, Kanagawa-ken (JP); Numata, Tsutomu, Sagamihara-shi, Kanagawa-ken (JP); Ohgaki, Kazutaka, Sagamihara-shi, Kanagawa-ken (JP)
(74) Representative: Burt, Roger James, Dr.

(56) References cited:
- EP-A- 0 174 095
- EP-A- 0 321 942

## Description

### Field of the Invention

This invention relates to a disk storage system with access control for controlling the access of a head to a disk provided with a plurality of tracks each of which has a plurality of sectors.

### Background of the Invention

An information processing system which is disclosed in JP-A-5833,768 (Japanese Patent Application No. 56-130,208), which in order to successfully perform reading or writing even when the number of sectors to be read or written becomes greater than the number of sectors in one track, comprises a register in which the number of the sectors to be received in one track is set by a processor, and a counter in which the first sector address for starting processing (i.e., reading or writing) is set by the processor and which counts the processed sectors. This information processing system compares the count value of said counter with the value of said register, and causes the track address to be stepped when the values are equal. In this information processing system if the number of sectors to be received in any one track is the same for all the tracks, the processor may set the number of the sectors to be received in one track just once at the start. However, since some defective sections are usually included in the disk, the processor must set the number of the sectors to be received for every track, and therefore the time required for switching the track will necessarily be increased and the burden of the processor will be increased.

### Disclosure of the Invention

Accordingly, the invention provides a storage disk having a plurality of tracks, each of which has a plurality of sectors, arranged from a first to a final sector according to the order in which the sectors are accessed, and characterised in that stored in the final sector of each track is a designation that it is the final sector of that track. The invention further provides a disk storage system adapted for use with a disk as claimed in any preceding claim, said disk storage system including head position controlling means for controlling the access of a head to the disk, and characterised by means for detecting said final sector designation and generating a final sector detecting signal; and wherein the head position controlling means, in response to said final sector detecting signal, terminates the access of the head to the track in which said final sector designation has been detected.

Preferably the final sector of the disk is a defect-free sector, and the designation that a sector is the final sector of a track comprises a bit signal written in an ID field of the final sector. It is also preferred that the head position controlling means includes a processor and that the final sector detecting signal is an interrupt signal applied to the processor. It is further preferred that the disk storage system further includes sector detecting means for generating a sector detecting signal every time the sector to be accessed first or one of the following sectors has been accessed by the head, and an access completion detecting means for outputting an interrupt signal representing access completion after receipt of as many sector detecting signals as the number of sectors to be accessed.

An advantage of the disk storage apparatus and the disk used therein of the present invention is that when reading or writing extending over a plurality of tracks is performed, the time required for switching the track can be shortened and the burden of the processor can be lightened.

In accordance with the present invention, a final sector designating means is provided in the final sector of each of the data tracks in a disk. The final sector designating means is provided by, for example, making bit 0 of a specific byte in an ID (an abbreviation for Identification) field of the final sector "1". Utilizing a signal detecting such a final sector designating means for switching the track, the processor does not need to set the number of sectors to be accessed for every track.

Positioning of a head on the disk can be performed under the control of a processor, such as a microprocessor. A signal detected by the final sector designating means is applied as an interrupt signal to the processor. The processor can thereby terminate the access of the head to the track in which the final sector has been detected, and can move the head toward the following target track.

In a case in which reading or writing (these operations are generally referred to as an "access") extends over a plurality of the tracks, it is necessary for the processor to be informed of the final sectors in each track between the first track and the penultimate track, and the access completion after the last sector to be accessed in the final track.

The final sector can be identified by detecting the final sector designating means associated therewith, as described above. In addition, a sector detecting signal can be generated every time the sector to be accessed first or each of the following sectors has been accessed by the head. An interrupt signal representing access completion is generated by counting said sector detecting signals until the number of the sectors in all the tracks to be accessed by the head has been counted. The access completion of the last sector to be accessed in the final track is thereby detected.

When it is necessary to access a plurality of tracks, the microprocessor need not set the number of the sectors for every track individually in the register to be able to access them. Therefore, the work of the microprocessor can be reduced and the access time required for access to such sectors can be effectively shortened. In addition, the microprocessor need not calculate the number of the sectors in each track to be able to access them, which also promotes reduction of the work of the microprocessor.

Typically, bit 0 of byte 0 in the ID field included in each of the final sectors of the tracks is assigned to a final sector indicating bit, although any bit in the ID field may be assigned to the final sector indicating bit. Further, a flag detector and a D flip-flop can be combined to form the final sector detecting means, but any means for generating a predetermined signal for a fixed period after a final sector indicating bit reading signal is inputted thereto may also be employed as the final sector detecting means. An ID register, a comparator and an ID preset counter can be combined with each other to form the sector detecting means, although other means may be employed. The access completion detecting means can be made from a sector number preset counter and a NOR gate, but other structures may be used such as a register in which the total number of sectors to be accessed is preset, a counter whose count value is increased by one every time each of the physical sectors is detected, and a comparator which compares the count of said counter with the value of said register. In short, any means which can detect the completion of access to all the sectors to be accessed may be used.

In a disk storage apparatus of the present invention, when reading or writing extending over a plurality of tracks is performed, the time required for switching the track can be shortened and the work of a processor can be effectively reduced. The present invention is not limited to magnetic hard disk files, but may be applied to any sector mode date storage disk, such as a magnetic floppy disk, a magneto-optical disk, an optical disk or the like (in this context data storage includes the storage of source in object code, text and so on).

### Brief Description of the Drawings:

Figure 1 is a simplified block diagram illustrating a magnetic hard disk according to the present invention;
Figure 2 is a diagram of the format magnetic hard disk shown in Figure 1;
Figure 3 shows an enlarged portion of the magnetic hard disk shown in Figure 2 showing both an ID field and data field in one sector;
Figure 4 is a diagram illustrating a typical structure of an ID field of Figure 3; and
Figure 5 is a diagram illustrating the structure of byte 0 in the ID field of Figure 4.

### Detailed Description

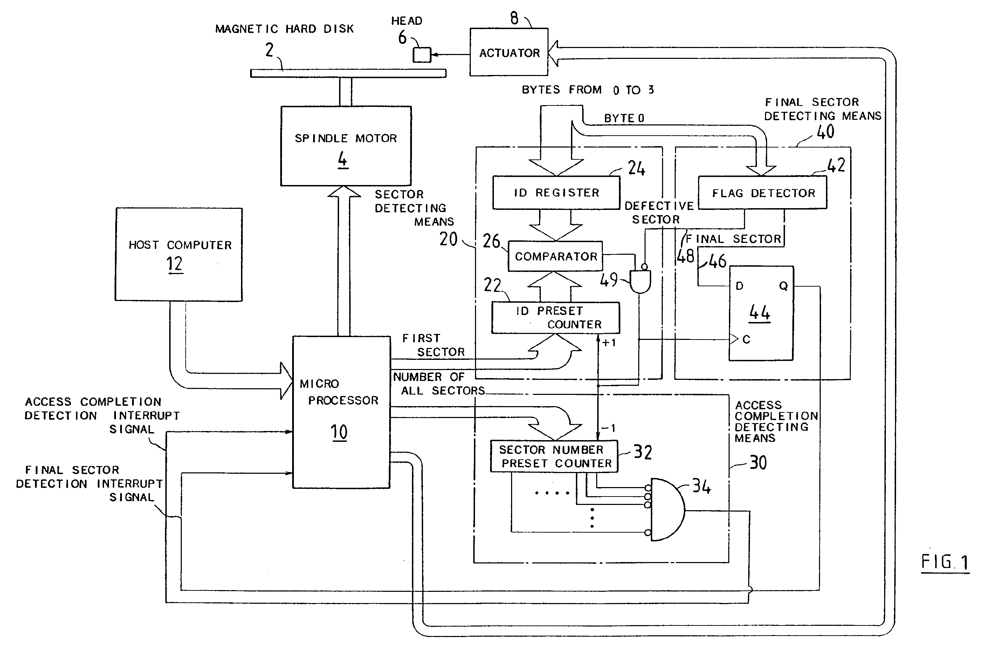

Figure 1 shows a preferred embodiment of a magnetic hard disk control apparatus according to the present invention. This magnetic hard disk control apparatus comprises a spindle motor 4 for rotating a magnetic hard disk 2, a magnetic head 6 for writing data to or reading data from the magnetic hard disk 2, a head actuator 8 for supporting the magnetic head 6 and for performing both seek and tracking operations, and a microprocessor 10 for controlling both the spindle motor 4 and the head actuator 8.

To initiate an access operation, the host computer 12 outputs a control command representing both the first logical sector and the number of the logical sectors which are necessary for reading or writing with respect to the hard disk 2, to the microprocessor 10. In response to the control command, the microprocessor 10 outputs the number of the sector to be accessed first to a sector detecting means 20, and outputs the total number of sectors to be accessed to an access completion detecting means 30.

The sector detecting means 20 comprises an ID preset counter 22, an ID register 24, a comparator 26 and an AND gate 49. The ID preset counter 22 is preset with the number of the sector to be accessed first which is outputted from the microprocessor 10, and its count value is increased by one every time a sector detecting signal is outputted from the AND gate 49. The ID register 24 stores the number representing the sector which is read out from the associated ID field in the disk by the head from bytes 1 to 3 of the associated ID field. The comparator 26 compares the count value of the ID preset counter 22 with the value stored in the ID register 24, and outputs a coincidence signal when the values are identical. The AND gate 49 then outputs a sector detecting signal 48 to the ID preset counter 22, the access completion detecting means 30, and the final sector detecting means 40 when the coincidence signal is outputted from the comparator 26 and a signal representing a defective sector is not outputted from a flag detector 42, as will be described later. In short, the sector detecting means 20 generates a sector detecting signal every time the sector to be accessed has been accessed by the head 6.

The access completion detecting means 30 comprises a sector preset counter 32 and a NOR gate 34. The sector preset counter 32 is preset with the total number of sectors to be accessed which is outputted from the microprocessor 10, and its counter value is decreased by one every time the sector detecting signal is received from the sector detecting means 20. The NOR gate 34 receives the output values from the sector preset counter 32. In this connection, all the output bits of the sector preset counter 32 are set to zero when the sector detecting signals have been received from all of the sectors to be accessed by the head. In response to these outputs, the NOR gate 34 outputs a signal "1" representing the access completion. This signal "1" is then applied as an interrupt signal to the microprocessor 10.

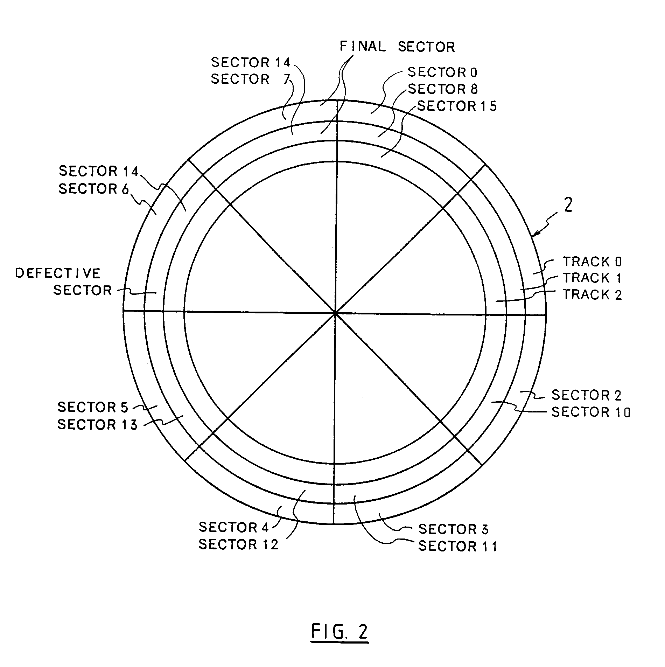

Figure 2 shows an example of the sector composition of the magnetic hard disk 2 shown in Figure 1. Though the disk 2 is actually provided with 27 physical sectors per track, in order to simplify the description, Figure 2 shows a sector composition in which there are 8 physical sectors per track. The physical sectors are generally denoted, from the first track to the final track, by serial numbers, i.e., the logical sector numbers. However, if a certain physical sector is defective, the same number as that of the defective sector is assigned as the logical sector number of the following physical sector. In the example of the sector arrangement shown in Figure 2, since there are no defective sectors in track 0, the successive logical sector numbers from 0 to 7 are assigned in numerical order to the eight sectors in track 0. On the other hand, for track 1, since the next to last sector is defective, the same logical sector number, i.e., logical sector number 14, is assigned to both the last sector and the defective next to last sector.

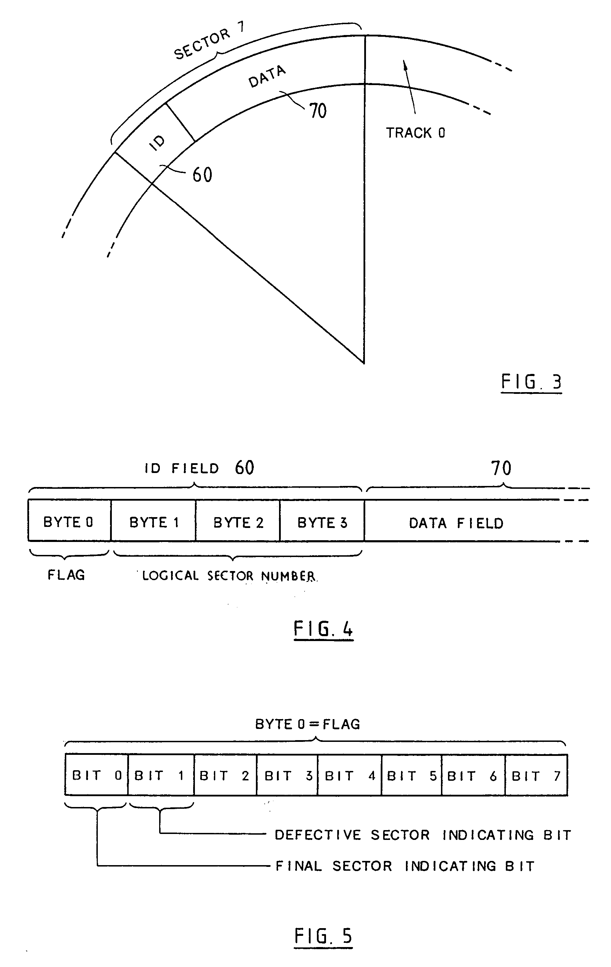

Figure 3 shows the format of one of the sectors in the magnetic hard disk shown in Figure 2. In Figure 3, though only the format of sector 7 of the final sector in the track 0 is illustrated by the example, all sectors in the disk have the same format as that of sector 7. Each sector consists of an ID field 60 and a data field 70. The attribute data for the associated sector is written in the ID field 60. A logical sector number, a flag that indicates whether the sector is the final sector or not, and a flag that indicates whether the sector is a defective sector or not are included in the attribute data. Data inputted by a user, data to be outputted to a user, data to be processed by the host computer 12, data processed and outputted by the host computer 12, and the like are recorded in the data field 70.

Figure 4 shows the constitution of the ID field 60. The ID field 60 consists of four bytes, i.e., byte 0, byte 1, byte 2 and byte 3. In this connection, a logical sector number part consists of bytes 1, 2 and 3 while byte 0 makes up the flag part.

Figure 5 shows the constitution of byte 0 in the ID field 60. The byte 0 consists of eight bits. Bit 0 indicates whether the sector is the final sector or not and bit 1 indicates whether the sector is defective or not. When the sector is the final sector, bit 0 is set to "1", and when the sector is a defective sector, bit 1 is set to "1". Since the sector assigned to the final sector is a defect-free sector, in the final sector, bit 0 of byte 0 is "1" and bit 1 thereof is "0".

The final sector detecting means 40 comprises a flag detector 42 and aD flip-flop 44. The flag detector 42 receives byte 0 in the ID field which is read out by the head 6, and outputs a "1" signal to the output line corresponding to the "1" bit among the bits constituting byte 0. Since byte 0 consists of eight bits, generally, the flag detector 42 has eight output lines. However, only bit 0 of byte 0, the bit indicating whether this sector is the final sector or not, and bit 1 of byte 0, the bit indicating whether this sector is a defective sector or not, relate to the present invention, and therefore only these bits 0 and 1 and output lines 46 and 48 corresponding respectively thereto, will be described herein. The flag detector 42 outputs a "1" signal to the output line 46 when bit 0 of byte 0 in the ID field is "1", i.e., the detector 42 detects that the sector is the final sector. The flag detector 42 outputs a "1" signal to the line 48 when bit 1 of byte 0 in the ID field is "1", i.e., the sector is a defective sector

The D flip-flop 44 has aD input terminal connected to the line 46, a clock input terminal C connected to the output of the AND gate 49 in the sector detecting means 20, and a Q output terminal connected to the interrupt input of the microprocessor 10. When the D flip-flop 44 receives a "1" signal at the clock input C after it has received a "1" signal at the D input, it generates a "1" signal at the Q output. That is, after the flag detector 42 has detected that the present sector is the final sector, the sector detecting means 20 identifies the coincidence of the sector number, and so the D flip-flop outputs a final sector detecting signal as an interrupt signal to the microprocessor 10.

As a more detailed example, example, assume that a physical sector 14 in a track 1 is a defective sector (for simplicity, it is assumed that the number of the physical sectors per track is eight). Therefore, the bit representing a defective sector (bit 1 of byte 0 in the ID field) in the physical sector 14 is set to "1", and the logical sector number 14, which is the same number as that of the defective sector 14, is also written in the ID field of the physical sector 15. The logical sector numbers in the ID fields of the subsequent physical sectors are obtained by subtracting one from the number of the physical sector.

The microprocessor 12 presets a value of 0 to the ID preset counter 22 of the logical sector detecting means 20 and a value of "16" to the sector number preset counter 32 of the access completion detecting means 30.

Since the physical sector 0 is not the final sector, bit 0 of byte 0 in its ID field is set to "0". Therefore, when this bit 0 is read out by the head 6, the flag detector 42 of the final sector detecting means 40 outputs a "0" signal, indicating that this sector is not the final sector, to the output line 46. In addition, physical sector 0 is not a defective sector and so bit 1 of byte 0 in its ID field is set to "0". Therefore, when this bit 1 is read out by the head 6, the flag detector 42 outputs a "0" signal to the output line 48, which allows the data of the data field in the physical sector 0 to be available. When the head 6 reads out bytes from 1 to 3 of the ID field in the physical sector 0, the ID register 24 is loaded with a "0" value. In response to the output of the ID register 24, the comparator 26 outputs a coincidence signal. By receiving the coincidence signal, the count of ID counter 22 is increased by one to be "1", while the count of the sector number preset counter 32 is decreased by one to be "15". The coincidence signal is also applied to the clock input of the D flip-flop 44 in the final sector detecting means 40. However, a "1" signal representing the final sector is not applied to the D input of the D flop-flop 44, and therefore the Q output of the D flip-flop 44 becomes "0".

When the head 6 reads out bytes from 1 to 3 of the ID field in the next physical sector 1, the ID register 24 is loaded with a "1" value. In response to the output of the ID register 24, the comparator 26 outputs a coincidence signal. This coincidence signal is applied as a sector detecting signal to the ID counter 22, the sector number preset counter 32, etc. through the AND gate 49. As a result, the count of the ID counter 22 is increased by one to be "2", while the count of the sector number preset counter 32 is decreased by one to be "14".

In the same manner, when the head 6 reads out the ID fields in sectors 2, 3, 4, 5 and 6 one by one, correspondingly, the ID register 24 is loaded with the values "2", "3", "4", "5" and "6" in turn, with the comparator 26 outputting a coincidence signal every time the ID register 24 is loaded. Whenever the sector detecting signal is generated, the count value of the ID preset counter 22 is increased one by one to be "3", "4", "5", 6" and 7" in turn, while the count of the sector number preset counter 32 is decreased one at a time to be "13", "12", "11", "10" and "9" in turn.

Now, since sectors 1, 2, 3, 4, 5 and 6 are neither the final sector nor a defective sector, both bits 0 and 1 of byte 0 in each of their ID fields are set to "0", and when these sectors are accessed in turn by the head 6, the flag detector 42 outputs "0" signals to the output lines 46 and 48. The physical sector 7 is the final sector in the track 0 and correspondingly bit 0 of byte 0 in its ID field is set to "1". Therefore, when this bit 0 is read out by the head 6, the flag detector 42 outputs to the output line 46 a signal "1" indicating that this physical sector 7 is the final sector. This signal "1" is then applied to the D input of the D flip-flop 44 through the line 46. The physical sector 7 is not a defective sector, so bit 1 of byte 0 in its ID field is set to "0". Therefore, when this bit 1 is read out by the head 6, the flag detector 42 outputs a "0" signal to the line 48, which makes the data of the data field in the physical sector 7 available.

When the head 6 reads out bytes from 1 to 3 of the ID field in the physical sector 7, the ID register 24 is loaded with a "7" value. As described above, since the count value of the ID preset counter 22 is set to "7", the comparator 26 outputs a coincidence signal. This coincidence signal is applied as a sector detecting signal to the clock input of the D flip-flop 44 in the final sector detecting means 40 through the AND gate 49. As a result, the Q output of the D flip-flop 44 becomes "1". This Q output of "1" is then applied as a final sector detection interrupt signal to the microprocessor 10. In response to the final sector detection interrupt signal, after the completion of access to the sector 7, a flag indicating that the head 6 should be moved to the next track is set in the microprocessor 10.

On receiving the sector detecting signal, the count of the ID preset counter 22 is increased by one to be "8", while the count of the sector number preset counter 32 is decreased by one to be "8". When the head 6 completes access to the data field in the physical sector 7, the microprocessor 10 applies an electric signal to the actuator 8 to move the head 6 to the next track, i.e., track 1. As a result, the head 6 is moved to the track 1 under the control of the actuator 8.

In the track 1, when the head 6 reads out the ID fields of physical sectors 8, 9, 10, 11, 12 and 13 in turn, the flag detector 42 outputs a signal "0" to the output line 46 because these physical sectors are not the final sector, and the flag detector 42 also outputs a "0" signal to the output line 48 because these physical sectors are not a defective sector. The ID register 24 is successively loaded with the values "8", "9", "10", "11", "12" and "13", and every time the ID register 24 is loaded, the comparator 26 outputs a coincidence signal, and in response to the coincidence signal, the AND gate 49 generates a sector detecting signal. Whenever this sector detecting signal is generated, the count value of the ID preset counter 22 is increased one by one to be "9", "10", "11", "12", "13" and "14" in turn, while the count of the sector number preset counter 32 is decreased one by one to be "7", "6", "5", "4", "3" and "2" in turn.

Since physical sector 14 is a defective sector, "1" is written in the defective sector indicating bit (bit 1 of byte 0) of its ID field, and the signal 48 becomes "1". As a result, a signal which causes the counts of the ID preset counter 22 and sector number preset counter 32 to be increased and decreased, respectively, is not outputted from the AND gate 49. Therefore the count of the ID preset counter 22 remains at "14" while the count of the sector number preset counter 32 remains at "2".

Since the physical sector 14 is a defective sector, as described above, in the ID field of the physical sector 15 a logical sector number 14 is written. At the same time, since the physical sector 15 is the final sector in the track 1, "1" is recorded in bit 0 of byte 0 in its ID field. When this bit 0 is read out by the head 6, the flag detector 42 of the final sector detecting means 40 outputs a "1" signal representing the final sector to the output line 46. The "1" signal is then applied to the ID input of the D flip-flop 44 through the line 46. When bytes from 1 to 3 of the ID field in this sector 15 are in turn read out by the head 6, the ID register 24 is loaded with a "14" value. As described above, since the count value of the ID preset counter 22 is set to "14", the comparator 26 outputs a coincidence signal. This coincidence signal is applied as a sector detecting signal to the clock input of the D flip-flop 44 in the final sector detecting means 40 through the AND gate 49. As a result, the Q output of the D flip-flop 44 becomes "1". This Q output of "1" is then applied as a final sector detection interrupt signal to the microprocessor 10.

On receiving the sector detecting signal, the count of the ID present counter 22 is increased by one to be "15", while the count of the sector number preset counter 32 is decreased by one.

When the head 6 completes the access to the data field in the physical sector 15 (i.e., the second logical sector 14), the microprocessor 10 applies an electric signal to the actuator 8 to move the head 6 to the next track, i.e. track 2. In response to the signal, the actuator 8 moves the head 6 to the track 2.

Since a logical sector 15 of the first physical sector in the track 2 is not the final physical sector, the value of bit 0 of byte 0 in its ID field is set to "0". Therefore, when this bit 0 is read out by the head 6, the flag detector 42 of the final sector detecting means 40 outputs a "0" signal representing that this sector is not the final sector to the line 46. In addition, since the logical sector 15, i.e., the physical sector 16 is not a defective sector, bit 1 of byte 0 in its ID field is set to "0". Accordingly, when this bit 1 is read out by the head 6, the flag detector 42 outputs a "0" signal to the line 48. As a result, the physical sector 16 is shown not to be a defective sector, which makes the data in the physical sector 16 available.

When the head 6 reads out bytes from 1 to 3 of the ID field in the physical sector 16, the ID register 24 is loaded with a value "15". As described above, the count of the ID preset counter 22 is set to "15", therefore the comparator 26 outputs a coincidence signal. This coincidence signal is applied as a sector detecting signal to the preset counter 22, the sector number preset counter 32, etc. through the AND gate 44. By receiving the coincidence signal, the count of the ID preset counter 22 is increased by one to be "17", while the count of the sector number preset counter 32 is decreased by one to be "0".

When the count of the sector number preset counter 32 becomes "0", "0" signals are outputted to all the output bit lines of the counter 32. On receiving these "0" signals, the NOR gate 34 outputs a "1" signal as a NOR signal. This signal "1" is then applied as an access completion detection interrupt signal to the microprocessor 10. As a result, the microprocessor 10 is informed that the processing, with respect to the command given by the host computer 12, has been completed.

## Claims

1. A storage disk (2) having a plurality of tracks, each of which has a plurality of sectors, arranged from a first to a final sector according to the order in which the sectors are accessed,
and characterised in that stored in the final sector of each track is a designation that it is the final sector of that track.

2. A storage disk according to Claim 1, wherein the sector designated as being the final sector of the track is defect free.

3. A storage disk according to any preceding claim, wherein the designation that a sector is the final sector of a track comprises a bit signal written in the ID field of the final sector.

4. A disk storage system adapted for use with a disk as claimed in any preceding claim, said disk storage system including head position controlling means (8, 10) for controlling the access of a head to the disk,
and characterised by means (40) for detecting said final sector designation and generating a final sector detecting signal; and wherein the head position controlling means (8, 10), in response to said final sector detecting signal, terminates the access of the head to the track in which said final sector designation has been detected.

5. A disk storage system as claimed in claim 4 wherein said head position controlling means includes a processor (10) and said final sector detecting signal is an interrupt signal applied to the processor.

6. A disk storage system as claimed in claim 4 or claim 5, said disk storage system further including sector detecting means (20) for generating a sector detecting signal every time the sector to be accessed first or one of the following sectors has been accessed by said head, and an access completion detecting means (30) for outputting an interrupt signal representing access completion after receipt of as many sector detecting signals as the number of sectors to be accessed.

7. A disk storage system as claimed in claim 4, claim 5 or claim 6, further comprising a storage disk as claimed in claim 1, claim 2 or claim 3.

## Patentansprüche

1. Disque de stockage (2) comportant une pluralité de pistes, chacune d'elles ayant une pluralité de secteurs, disposés entre un premier secteur et un secteur final en fonction de l'ordre d'accès aux secteurs,
et caractérisé en ce qu'une désignation qui est le secteur final de cette piste est stockée dans le secteur final de cette piste.

2. Disque de stockage selon la revendication 1, dans lequel le secteur désigné comme étant le secteur final de la piste est sans défaut.

3. Disque de stockage selon l'une quelconque des revendications précédentes, dans lequel la désignation qu'un secteur est le secteur final d'une piste comprend un signal binaire inscrit dans le champ ID du secteur final.

4. Système de stockage à disque apte à être utilisé avec un disque selon l'une quelconque des revendications précédentes, ledit système à disque comportant des moyens de commande (8, 10) de position de tête pour commander l'accès d'une tête au disque,
et caractérisé par des moyens (40) pour détecter ladite désignation du secteur final et pour générer un signal de détection de secteur final; et dans lequel les moyens de commande (8, 10) de position de tête, en réponse au signal de détection de secteur final, mettent fin à l'accès de la tête à la piste dans laquelle ladite désignation de secteur final a été détectée.

5. Système de stockage à disque selon la revendication 4 dans lequel lesdits moyens de commande de position de tête comportent un dispositif de traitement (10) et ledit signal de détection de secteur final est un signal d'interruption appliqué au dispositif de traitement.

6. Système de stockage à disque selon la revendication 4 ou la revendication 5, ledit système de stockage à disque comprenant en outre un moyen (20) de détection de secteur pour générer un signal de détection de secteur chaque fois que le secteur auquel on doit accéder en premier ou l'un des secteurs suivants a été accédé par ladite tête, et un moyen (30) de détection de fin d'accès pour délivrer un signal d'interruption représentant la fin de l'accès après réception d'autant de signaux de détection de secteurs qu'il y a de secteurs auxquels on doit accéder.

7. Système de stockage à disque selon la revendication 4, la revendication 5 ou la revendication 6, comprenant en outre un disque de stockage selon la revendication 1, la revendication 2 ou la revendication 3.

## Revendications

1. Eine Speicherplatte 2 mit mehreren Spuren, die jeweils in mehrere Sektoren aufgegliedert sind, welche in der Reihenfolge ihres Zugriffs vom ersten bis zum letzten Sektor angeordnet sind,
wobei die Speicherplatte dadurch gekennzeichnet ist, daß im letzten Sektor jeder Spur eine Markierung gespeichert ist, die den Sektor als letzten Sektor der Spur ausweist.

2. Eine Speicherplatte gemäß Anspruch 1, bei welcher der als letzter Sektor der Spur gekennzeichnete Sektor fehlerfrei ist.

3. Eine Speicherplatte gemäß den vorhergehenden Ansprüchen, bei der die Markierung, die einen Sektor als letzten Sektor einer Spur kennzeichnet, aus einem in das ID-Feld des letzten Sektors geschriebenen Bit-Signal besteht.

4. Ein Plattenspeichersystem zur Verwendung mit einer Platte gemäß den vorhergehenden Ansprüchen, das zur Kontrolle des Zugriffs eines Kopfes auf die Platte Mittel 8, 10 zur Steuerung der Kopfposition enthält,
und durch Mittel 40 zur Erkennung der Markierung des letzten Sektors und zur Erzeugung eines Endsektorerkennungssignals gekennzeichnet ist; und worin die Mittel 8, 10 zur Steuerung der Kopfposition als Antwort auf das Endsektorerkennungssignal den Zugriff des Kopfes auf die Spur beendet, in welcher die Markierung, die den Sektor als letzten Sektor kennzeichnet, erkannt wurde.

5. Ein Plattenspeichersystem gemäß Anspruch 4, in dem das Mittel zur Steuerung der Kopfposition einen Prozessor 10 enthält und das Endsektorerkennungssignal ein Interrupt-Signal an den Prozessor ist.

6. Ein Plattenspeichersystem gemäß Anspruch 4 oder 5, das ferner ein Sektorerkennungsmittel 20 enthält, das jedesmal ein Sektorerkennungssignal erzeugt, wenn der Kopf auf den zuerst zu verarbeitenden oder einen darauffolgenden Sektor zugegriffen hat, sowie ein Mittel zur Erkennung des Zugriffsendes 30 zur Ausgabe eines Interrupt-Signals, das die Beendigung signalisiert, wenn die Anzahl der empfangenen Interrupt-Signale zur Kennzeichnung des Zugriffsendes mit der Anzahl der zu verarbeitenden Sektoren übereinstimmt.

7. Ein Plattenspeichersystem gemäß Anspruch 4, 5 oder 6, das darüber hinaus eine Speicherplatte gemäß Anspruch 1, 2 oder 3 enthält.
